# EUROPÄISCHE PATENTSCHRIFT

(11) **EP 3 017 357 B1**
(45) Veröffentlichungstag und Bekanntmachung des Hinweises auf die Patenterteilung: **17.05.2017**
(21) Anmeldenummer: 14766901.4
(22) Anmeldetag: 27.08.2014
(51) Int. Cl.: G06F 3/0488, G06F 3/01, G06F 3/03, G06T 7/20, G06T 9/00, G06K 9/00, B60K 37/06, B60K 35/00

(54) **VERFAHREN ZUM BETREIBEN EINES GESTENERKENNUNGSSYSTEMS FÜR EINEN KRAFTWAGEN**
METHOD FOR OPERATING A GESTURE RECOGNITION SYSTEM FOR A MOTOR VEHICLE
PROCÉDÉ D'EXPLOITATION D'UN SYSTÈME DE RECONNAISSANCE DE GESTES DANS UN VÉHICULE AUTOMOBILE

(30) Priorität: 14.09.2013 DE 102013015337
(43) Veröffentlichungstag der Anmeldung: 11.05.2016
(73) Patentinhaber: Daimler AG, 70327 Stuttgart (DE)
(72) Erfinder: ENTENMANN, Volker, 71563 Affalterbach (DE)
(74) Vertreter: JENSEN & SON
(86) Internationale Anmeldenummer: PCT/EP2014/002337
(87) Internationale Veröffentlichungsnummer: WO 2015/036089

(56) Entgegenhaltungen:
- EP-A1- 2 469 496
- DE-A1-102004 033 335
- US-A1- 2010 027 845
- US-A1- 2010 079 411

## Beschreibung

Die Erfindung betrifft ein Verfahren nach dem Oberbegriff von Patentanspruch 1 sowie ein Gestenerkennungssystem nach dem Oberbegriff von Anspruch 6.

In modernen Kraftwagen setzen sich zur Steuerung von Zusatzfunktionen der Kraftwagen zunehmend Gestenerkennungssysteme durch. Hier kommt eine Vielzahl von unterschiedlichen Gestenerkennungssystemen zur Anwendung. Es handelt sich sowohl um berührungslose Gestenerkennungssysteme, welche ein Geste beispielsweise über eine Kamera erkennen, als auch um Gestenerkennungssysteme, die durch einen Nutzer berührt werden müssen, um eine Geste erkennen zu können. Beispiele sind hier berührungsempfindliche Bildschirme oder auch optische Fingernavigationsmodule, welche oft auch "optical finger navigation" oder "OFN" genannt werden. Für sämtliche Gestenerkennungssysteme in einem Kraftwagen gilt, dass eine Geschwindigkeit, vor allem aber eine Richtung einer Geste möglichst präzise bestimmt werden soll. Die augenblickliche Geschwindigkeit und die Richtung einer Geste können durch einen Geschwindigkeitsvektor dargestellt, d.h. repräsentiert werden. Dessen Richtung repräsentiert dann die Richtung der erfassten Geste und seine Länge die Geschwindigkeit der Geste. Zum Bestimmen der Richtung einer Geste wird solch ein Geschwindigkeitsvektor dann oft im Rahmen einer Quantifizierung der Geste klassifiziert, um beispielsweise horizontale und vertikale Gesten voneinander zu unterscheiden.

In der US 8,212,794 B2 wird ein optisches Fingernavigationsmodul offenbart, welches dazu ausgelegt ist, Bediengesten anhand eines Vergleichs von erfassten Bewegungsinformationen mit linearen Grenzfunktionen zu quantifizieren bzw. zu klassifizieren.

Die vorliegende Erfindung hat zur Aufgabe, ein Verfahren zum Betreiben eines Gestenerkennungssystems für einen Kraftwagen bereitzustellen, mit welchem die Erkennungssicherheit sowie die Klassifizierungszuverlässigkeit erhöht wird. Die Erfindung hat ebenfalls zur Aufgabe, eine Vorrichtung zum Durchführen eines solchen Verfahrens bereitzustellen.

Diese Aufgabe wird erfindungsgemäß durch ein Verfahren bzw. ein Gestenerkennungssystem gemäß den unabhängigen Patentansprüchen gelöst. Vorteilhafte Ausführungen der Erfindung sind Gegenstand der abhängigen Patentansprüche, der Beschreibung und der Figuren.

Um die Erkennungssicherheit und Klassifikationszuverlässigkeit zu erhöhen, sind in einem erfindungsgemäßen Verfahren zum Betreiben eines Gestenerkennungssystems für einen Kraftwagen eine Reihe von Schritten vorgesehen: Zunächst ein Erfassen einer Bewegungsgeste, welche zu einer Bedienhandlung gehörig ist, durch eine Erfassungseinheit. Dann ein Erzeugen eines Bewegungsvektors, welcher die erfasste Geste repräsentiert, durch die Erfassungseinheit, gefolgt von einem Übermitteln des Bewegungsvektors an eine Verarbeitungseinheit. Sodann ein Vergleichen des Bewegungsvektors mit mindestens zwei Grenzkurven, welche in einem Ausschnitt eines Vektorraums mindestens drei getrennte Bereiche definieren, durch die Verarbeitungseinheit. Sodann, in Abhängigkeit eines Ergebnisses des zuvor durchgeführten Vergleichens, ein Ermitteln einer Richtung der Bewegungsgeste durch die Verarbeitungseinheit als horizontal, falls der Bewegungsvektor in einem ersten Bereich der drei getrennten Bereiche liegt, als vertikal, falls der Bewegungsvektor in einem zweiten Bereich der drei getrennten Bereich liegt, und als nicht klassifizierbar, falls der Bewegungsvektor in einem dritten Bereich der drei getrennten Bereiche liegt. Wesentlich für die Erfindung ist hier, dass die Grenzkurven durch Funktionen definiert werden, welche nicht-linear von den Raumrichtungen abhängen.

Die Bewegungsgeste wird hier also in einer nicht-linearen Weise in eine hauptsächlich horizontale oder vertikale Bewegung quantisiert. Das hat den Vorteil, dass über eine Gestaltung der Nicht-Linearität eine begrenzte Sensorauflösung berücksichtigt werden kann, und somit gerade bei langsamen Fingerbewegungen, bei welchen im Allgemeinen die Richtungsinformation auf Grund der begrenzten Sensorauflösung ungenauer ist als bei schnellen Fingerbewegungen, eine erhöhte Erkennungssicherheit erreicht wird. Auf Grund der nicht-linearen Grenzkurven kann nämlich die Richtungstoleranz bei langsamen Bewegungen größer ausgelegt werden als bei schnellen Bewegungen. Ferner können über die nicht-linearen Funktionen auch typische Bewegungscharakteristika, welche bei dem Bedienen des Gestenerkennungssystems auftreten, bei der Gestenklassifikation bzw. -quantisierung berücksichtigt werden und damit die Klassifikationszuverlässigkeit erhöht werden.

In einer bevorzugten Ausführungsform der Erfindung ist es vorgesehen, dass die Raumrichtungen, von denen die Funktionen, welche die Grenzkurven definieren, abhängen, eine x-Richtung und eine y-Richtung sind. Damit sind die Grenzkurven also in einer Ebene definiert. Das hat den Vorteil, dass das Verfahren die Erkennungssicherheit und Klassifikationszuverlässigkeit bei zweidimensionalen Bewegungsgesten erhöht. Insbesondere kann so ein Scrollen als Bedienhandlung effizient bearbeitet werden. Zudem ist eine zweidimensionale Realisierung des Verfahrens einfach zu realisieren, da nur wenig Rechenkapazität erforderlich ist.

In einer besonders vorteilhaften Ausführungsform ist es vorgesehen, dass die zwei nichtlinearen Funktionen, welche die Grenzkurven definieren, wenn sie in einen Vektorwinkel-Vektorlängenraum transformiert werden, für unendlich kleine Vektorlängen einen endlichen vorbestimmten Vektorwinkel-Anfangswert, insbesondere zwischen 30° und 60°, annehmen, und für unendlich große Vektorlängen einen endlichen vorbestimmten Vektorwinkel-Endwert, insbesondere zwischen 10° und 80°. Das hat den Vorteil, dass so explizit für kurze Vektoren, also langsame Bewegungen, ein Klassifikationsbereich der Bewegungsgeste definiert werden kann und zugleich für lange Vektoren, d.h. schnelle Bewegungen, auf diese Art und Weise ein Grenzbereich definiert werden kann, indem keine Klassifikation erfolgt. Da die beiden Funktionen nicht-linear sind, können die beiden erwähnten Vorteile explizit und unabhängig voneinander eingestellt werden, und ferner zwischen den Extremen von sehr langsamen und sehr schnellen Bewegungen, also sehr kurzen und sehr langen Vektoren fast beliebig Charakteristika der Klassifikation bzw. Quantisierung der Gestenbewegung umgesetzt werden.

In einer bevorzugten Ausführungsform ist es vorgesehen, dass der Vektorwinkel-Endwert der ersten nicht-linearen Funktion größer ist als ihr Vektorwinkel-Anfangswert und der Vektorwinkel-Endwert der zweiten nicht-linearen Funktion kleiner ist als ihr Vektorwinkel-Anfangswert, wobei der Vektorwinkel-Anfangswert der ersten nicht-linearen Funktion größer oder gleich dem Vektorwinkel-Anfangswert der zweiten nicht-linearen Funktion ist. Das führt dazu, dass in einem Vektorwinkel-Vektorlängen-Raum die Grenzkurven für kleine Vektorlängen näher beieinander liegen, als für große Vektorlängen. Es ist also insbesondere der Winkelbereich des Vektorraums, in dem ein Vektor keiner horizontalen oder vertikalen Bewegung zugeordnet wird, also klassifiziert wird, für kleine Vektorlängen kleiner als für große Vektorlängen. Das hat den Vorteil, dass die Richtungstoleranz bei langsamen Bewegungen größer ist als bei schnellen Bewegungen, also insbesondere Abweichungen von horizontaler und/oder vertikaler Richtung bei langsamen Bewegungsgesten weniger leicht zu einem Ermitteln der Richtung der Bewegungsgeste als "nicht klassifizierbar" führen als bei schnellen Bewegungsgesten. Damit wird die Erkennungssicherheit und Klassifikationszuverlässigkeit gerade für langsame Bewegungen erhöht.

Es kann ferner vorgesehen sein, dass vor dem Vergleichen der Vektoren mit den Grenzkurven negative Komponenten des Bewegungsvektors mit -1 multipliziert werden und der Ausschnitt des Vektorraums in welchem das Vergleichen vorgenommen wird, ausschließlich Werte größer oder gleich Null umfasst. Insbesondere umfasst der Ausschnitt des Vektorraums also den sogenannten ersten Quadranten, der in einer x-y-Ebene durch x- und y-Werte größer gleich Null definiert ist. Mit anderen Worten wird also für eine Klassifikation der Bewegungsgeste nicht zwischen beispielsweise nach links oder nach rechts gerichteten Bewegungsgesten unterschieden, sondern nur auf den Winkel der Bewegungsgeste geachtet. Das hat den Vorteil, dass die Grenzkurven besonders einfach vorgegeben werden können und ein aufwändiges Überprüfen von Geltungsbereichen unterschiedlicher Grenzfunktionen nicht erforderlich ist.

Analog können vor dem Vergleichen auch die Grenzkurven aus dem ersten Quadranten in die anderen Quadranten gespiegelt werden und die Komponenten des Bewegungvektors unverändert belassen werden. Der Vergleich erfolgt dann also im gesamten Vektorraum, jedoch außerhalb des ersten Quadranten nur mit den jeweiligen Spiegelungen der Grenzkurven und nicht mit den Funktionen, aus denen sich die Grenzkurven ableiten.

Die Erfindung betrifft auch ein Gestenerkennungssystem für einen Kraftwagen. Dieses hat eine Erfassungseinheit, die ausgelegt ist, eine Bewegungsgeste, welche zu einer Bedienhandlung gehörig ist, zu erfassen, einen Bewegungsvektor, welcher die Bewegungsgeste repräsentiert, zu erzeugen und den Bewegungsvektor an eine Verarbeitungseinheit zu übermitteln. Diese Verarbeitungseinheit ist ebenfalls Teil des Gestenerkennungssystems und dazu ausgelegt, den Bewegungsvektor mit mindestens zwei Grenzkurven, welche in einem Ausschnitt eines Vektorraums zumindest drei getrennte Bereiche definieren, zu vergleichen und, in Abhängigkeit eines Ergebnisses des Vergleichens, eine Richtung der Bewegungsgeste als horizontal zu ermitteln, falls der Bewegungsvektor in einem ersten Bereich der drei getrennten Bereiche liegt, als vertikal, falls der Bewegungsvektor in einem zweiten Bereich der drei getrennten Bereiche liegt, und als nicht klassifizierbar, falls der Bewegungsvektor in einem dritten Bereich der drei getrennten Bereiche liegt. Hierbei ist die Verarbeitungseinheit dazu ausgelegt, für das Vergleichen Grenzkurven zu verwenden, die durch Funktionen definiert werden, welche nicht-linear von Raumrichtungen abhängen.

Es kann vorgesehen sein, dass die Erfassungseinheit eine berührungsempfindliche Erfassungseinheit ist. Das hat den Vorteil, dass ein effizientes Bestimmen des Geschwindigkeitsvektors möglich ist, da ja gerade in einem Kraftwagen mit mehreren Insassen die Bewegungsdaten grundsätzlich nur erfasst werden, wenn auch tatsächlich eine Berührung vorliegt, also eine Geste gewollt und damit eine Gestenerkennung erwünscht ist.

In einer besonders vorteilhaften Ausführungsform ist es vorgesehen, dass die Erfassungseinheit ein optisches Fingernavigationsmodul ist. Derartige Module, auch "optical finger navigation module" genannt, eignen sich in ganz besonderer Weise für eine Anwendung des Verfahrens, da diese typischerweise gerade bei langsamen Fingerbewegungen eine ungenauere Richtungsinformation als bei schnellen Fingerbewegungen zu Verfügung stellen. Hier ist also eine erhöhte Erkennungssicherheit bzw. Klassifikationszuverlässigkeit besonders wünschenswert. Insbesondere sind solche Module besonders klein, vielseitig verwendbar und stromsparend, so dass sie sich für eine Verwendung in einem Kraftwagen anbieten.

Die mit Bezug auf das erfindungsgemäße Verfahren vorgestellten bevorzugten Ausführungsformen und deren Vorteile gelten entsprechend für die erfindungsgemäße Vorrichtung und umgekehrt.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Ausführungsbeispiele der Erfindung werden nachfolgend anhand der Figuren erläutert.

Dabei zeigen:
- Fig. 1: Grenzkurven einer Ausführungsform des erfindungsgemäßen Verfahrens in einem Ausschnitt eines von zwei Raumrichtungen aufgespannten Vektorraums; und
- Fig. 2: eine Darstellung der Grenzkurven des in Fig. 1 gezeigten Beispiels in einem Vektorwinkel-Vektorlängen-Raum.

In den Figuren werden gleiche oder funktionsgleiche Elemente mit den gleichen Bezugszeichen versehen.

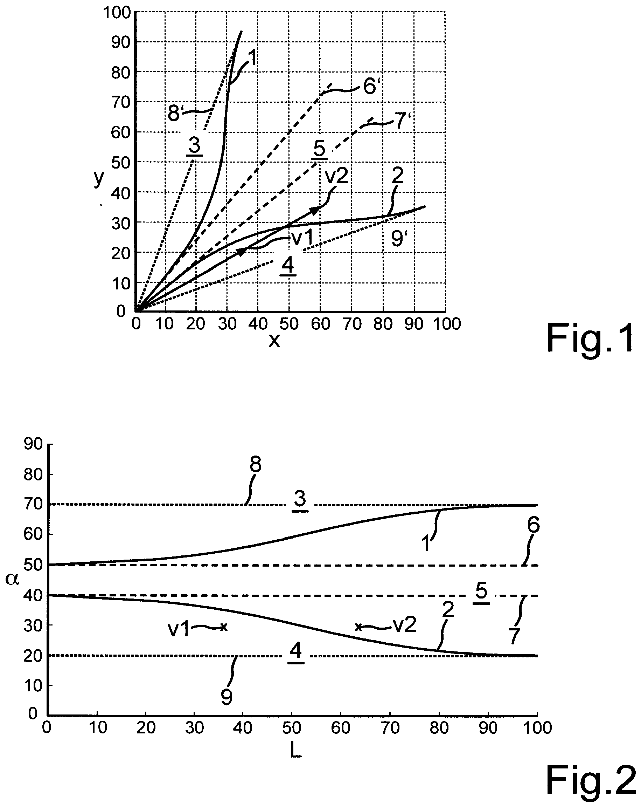

In Fig. 1 sind zwei Grenzkurven 1, 2 gemäß einer beispielhaften Ausführungsform eines erfindungsgemäßen Verfahrens gezeigt. Dargestellt ist hier ein Ausschnitt eines von zwei Raumrichtungen, nämlich der x-Richtung x und der y-Richtung y, aufgespannte Vektorraumes. Der Ausschnitt ist im vorliegenden Beispiel der erste Quadrant, d.h. er umfasst sämtliche aus positiven Vektoreinträgen x und y bestehende Vektoren. In diesen Ausschnitt eingezeichnet sind die beiden Grenzkurven 1, 2, welche sich ausgehend vom Ursprung monoton steigend und im vorliegenden Beispiel sogar mit einer gemeinsamen Symmetrieachse in den ersten Quadranten erstrecken, ohne sich dabei zu schneiden. Diese beiden Grenzkurven 1, 2 definieren drei Bereiche 3, 4, 5. Zwischen y-Achse und der Grenzkurve 1 befindet sich hier der erste Bereich 3. Bewegungsvektoren, welche sich in diesem ersten Bereich 3 befinden bzw. in diesem Bereich 3 enden, werden im gezeigten Beispiel einer Vertikalbewegung zugeordnet. Zwischen der Grenzkurve 2 und der x-Achse befindet sich im gezeigten Beispiel der zweite Bereich 4. Jeder Bewegungsvektor v1, welcher sich im Bereich 4 befindet, d.h. in diesem endet, wird als eine horizontale Bewegung repräsentierend klassifiziert. Zwischen den beiden Grenzkurven 1, 2 befindet sich der dritte Bereich 5. Jeder Bewegungsvektor v2, welcher in diesem Bereich 5 endet, bzw. die zu dem in diesem Bereich 5 endendem Bewegungsvektor v2 gehörigen Bewegungen, werden als nicht klassifizierbar eingeordnet. Die Grenzkurve 1 liegt am Ursprung zunächst auf einer Geraden 6', welche ebenfalls durch den Ursprung geht. Mit zunehmenden x-Werten löst sich jedoch die Grenzkurve 1 allmählich von der Geraden 6' ab. Mit zunehmenden x-Werten entfernt sich die Grenzkurve 1 immer weiter von der Geraden 6' und schmiegt sich schließlich asymptotisch an eine Gerade 8', welche ebenfalls durch den Ursprung verläuft und eine größere Steigung hat als die Gerade 6'. Analoges Verhalten zeigt die Grenzkurve 2. Diese ist im Ursprung deckungsgleich mit einer Geraden 7', von welcher sie sich mit zunehmenden x-Werten ablöst, um sich dann asymptotisch einer Geraden 9', welche wie die Gerade 7' durch den Ursprung verläuft, anzunähern. In diesem Fall hat jedoch die Gerade 9' eine geringere Steigung als die Gerade 7'. Im gezeigten Beispiel hat auch die Gerade 7' eine geringere Steigung als die Gerade 6'.

Wird nun ein Bewegungsvektor v1, v2 beispielsweise mit den beiden Grenzkurven 1, 2 verglichen, so wird überprüft, wo sich der Endpunkt des Bewegungsvektors v1, v2 in der gezeigten Darstellung befindet. Je nach Bereich 4, 5, 6, in welchem sich der Endpunkt dann befindet, wird die zu dem Bewegungsvektor v1, v2 gehörige Bewegungsgeste als im vorliegenden Beispiel horizontal oder vertikal oder aber als "nicht klassifizierbar" klassifiziert. Über den nicht-linearen Charakter der Grenzkurven 1, 2 wird hier also ein ganz besonderes, typisches Charakteristikum der Quantisierung der Bewegungsgesten bzw. ihrer Richtungen, erzielt. So wird ein Bewegungsvektor v1, welcher eine Bewegungsgeste in eine bestimmte Richtung mit einer bestimmten Geschwindigkeit repräsentiert im vorliegenden Beispiel als horizontale Bewegung eingestuft. Wird nun die gleiche Geste mit einer erhöhten Geschwindigkeit durchgeführt, so wird sie von einem anderen Vektor v2 repräsentiert, welcher einen gleichen Vektorwinkel α (Fig. 2), jedoch eine andere Vektorlänge L (Fig. 2) aufweist. Die Richtung der Bedienbewegung ist also die Gleiche, lediglich die Geschwindigkeit ist eine andere. Die nicht-lineare Grenzkurve hat hier nun zur Folge, dass die schnellere Bewegung bei gleicher Richtung als nichtklassifizierbar eingestuft wird. Damit wird beispielsweise der praktischen Erfahrung Rechnung getragen, dass bei langsamen Bewegungsgesten die Richtungsinformation auf Grund begrenzter Sensorauflösung im Allgemeinen ungenauer ist, als bei schnellen Fingerbewegungen. Es wird also über die nicht-lineare Grenzfunktion im vorliegenden Beispiel ermöglicht, dass langsame Bewegungen mit einer größeren Richtungstoleranz als horizontal bzw. vertikal klassifiziert werden. Gleichzeitig ist die Richtungstoleranz bei schnellen Bewegungen verringert, so dass im gezeigten Beispiel insbesondere ein Wechsel der Bewegungsrichtung schnell und zuverlässig erkannt wird.

In Fig. 2 sind die Grenzkurven 1, 2 des in Fig. 1 gezeigten Ausführungsbeispiels in einem anderen Vektorraum dargestellt. Es handelt sich um den Vektorwinkel-Vektorlängen-Raum, bei welchem der Vektorwinkel α über der Vektorlänge L aufgetragen wird. In diesem Vektorraum werden die Grenzkurven 1, 2 im vorliegenden Beispiel durch Funktionen der Form α(L)= α_{End}+(α_{Start}-α_{End})*exp[-a*(L/b)^{c}] beschrieben, wobei α_{End}, α_{Start}, a, b und c Parameter sind, über die der Grenzkurvenverlauf beeinflusst werden kann. Gezeigt sind die Grenzkurven 1, 2 hier für a=0,5, b=50 und c=3 sowie α_{Start}=50° und α_{End}=70° für Grenzkurve 1 und α_{Start}=40° und α_{End}=20° für Grenzkurve 2. Es sind selbstverständlich andere mathematische Beschreibungen der Grenzkurven möglich, welche dieselben oder ähnlich Eigenschaften liefern.

Die Geraden 6', 7', 8' und 9' (Fig. 1) gehen hier in Vektorwinkel-Anfangswerte 6, 7 sowie in Vektorwinkel-Endwerte 8, 9 über, da die Geraden 6', 7', 8' und 9' (Fig. 1) je einen bestimmten Vektorwinkel α repräsentieren. Sehr deutlich ist hier auch die asymptotische Annäherung der beiden Grenzkurven 1, 2 an die Vektorwinkel-Anfangswerte 6, 7 für gegen Null strebende Vektorlängen L und ihr asymptotisches Annähern an die Vektorwinkel-Endwerte 8, 9 für unendlich große Vektorlängen L zu erkennen. Insbesondere wird in dieser Darstellung des Beispiels auch deutlich, dass der dritte Bereich 5, in dem eine Bewegung als "nicht-klassifizierbar" klassifiziert wird, bei geringen Vektorlängen L wesentlich schmäler, also kleiner ist als bei großen Vektorlängen L. Dies hat hier auch zur Folge, dass wie schon in Fig. 1 beschrieben, der Vektor v1 in dem Bereich 4 liegt, welcher einer horizontalen Bewegung zugeordnet ist, wohingegen der Vektor v2, welcher die gleiche Richtung hat wie der Vektor v1, jedoch über eine größere Vektorlänge L verfügt, bereits nicht mehr kategorisiert werden kann, da er in den dritten Bereich 5 fällt. Eine Darstellung der herkömmlichen linearen Grenzfunktionen in dem Vektorwinkel-Vektorlängen-Raum würde hingegen gerade einen umgekehrten Effekt zeigen. Transformiert man nämlich die üblichen linearen Grenzkurven in diesen Raum, so stellt man fest, dass man entweder Geraden parallel zur Vektorlängen-Achse erhält, oder nicht-lineare Funktionen, welche für kurze Vektorlängen einen sehr breiten, also großen Bereich 5 aufweisen, in dem ein Vektor nicht klassifiziert werden kann und gleichzeitig für große Vektorlängen L dieser Bereich 5 einen immer kleineren Winkelbereich umfasst. Dann laufen nämlich die transformierten Grenzkurven für große Vektorlängen L nicht auseinander, sondern zusammen bzw. nähern sich an und liefern so eine gänzlich andere Charakteristik als die vorliegende Erfindung.

## Patentansprüche

1. Verfahren zum Betreiben eines Gestenerkennungssystems für einen Kraftwagen, mit den Schritten
- Erfassen einer Bewegungsgeste, welche zu einer Bedienhandlung gehörig ist, durch eine Erfassungseinheit,
- Erzeugen eines Bewegungsvektors, welcher die Bewegungsgeste repräsentiert, durch die Erfassungseinheit,
- Übermitteln des Bewegungsvektors an eine Verarbeitungseinheit durch die Erfassungseinheit,
- Vergleichen des Bewegungsvektors mit mindestens zwei Grenzkurven (1, 2), welche in einem Ausschnitt eines Vektorraums zumindest drei getrennte Bereiche (3, 4, 5) definieren, durch die Verarbeitungseinheit, und, in Abhängigkeit eines Ergebnisses des Vergleichens:
- Ermitteln einer Richtung der Bewegungsgeste durch die Verarbeitungseinheit als horizontal, falls der Bewegungsvektor in einem ersten Bereich (4) der drei getrennten Bereiche (3, 4, 5) liegt, als vertikal, falls der Bewegungsvektor in einem zweiten Bereich (3) der drei getrennten Bereiche (3, 4, 5) liegt, und als nicht klassifizierbar, falls der Bewegungsvektor in einem dritten Bereich (5) der drei getrennten Bereiche (3, 4, 5) liegt,
**dadurch gekennzeichnet, dass**
die Grenzkurven (1, 2) durch Funktionen definiert werden, welche nichtlinear von Raumrichtungen abhängen.

2. Verfahren nach Anspruch 1,
**dadurch gekennzeichnet, dass**
die Raumrichtungen eine x-Richtung (x) und eine y-Richtung (y) sind.

3. Verfahren nach Anspruch 2,
**dadurch gekennzeichnet, dass**
die zwei nichtlinearen Funktionen, welche die Grenzkurven (1, 2) definieren, wenn sie in einen Vektorwinkel(α)-Vektorlängen(L)-Raum transformiert werden, für unendlich kleine Vektorlängen (L) einen endlichen vorbestimmten Vektorwinkel(α)-Anfangswert (6, 7), insbesondere zwischen 30° und 60°, annehmen, und für unendlich große Vektorlängen (L) einen endlichen vorbestimmten Vektorwinkel(α)-Endwert (8, 9), insbesondere zwischen 10° und 80°.

4. Verfahren nach Anspruch 3,
**dadurch gekennzeichnet, dass**
der Vektorwinkel-Endwert (8) der ersten nichtlinearen Funktion größer ist als ihr Vektorwinkel-Anfangswert (6) und der Vektorwinkel-Endwert (9) der zweiten nichtlinearen Funktion kleiner ist als ihr Vektorwinkel-Anfangswert (7), wobei der Vektorwinkel-Anfangswert (6) der ersten nichtlinearen Funktion größer oder gleich dem Vektorwinkel-Anfangswert (7) der zweiten nichtlinearen Funktion ist.

5. Verfahren nach einem der vorhergehenden Ansprüche,
**dadurch gekennzeichnet, dass**
vor dem Vergleichen negative Komponenten des Bewegungsvektors mit -1 multipliziert werden und der Ausschnitt des Vektorraums ausschließlich Werte größer oder gleich Null umfasst.

6. Gestenerkennungssystems für einen Kraftwagen,
- mit einer Erfassungseinheit, die ausgelegt ist, eine Bewegungsgeste, welche zu einer Bedienhandlung gehörig ist, zu erfassen, einen Bewegungsvektor, welcher die Bewegungsgeste repräsentiert, zu erzeugen und den Bewegungsvektor an eine Verarbeitungseinheit zu übermitteln, und
- mit einer Verarbeitungseinheit, die ausgelegt ist, den Bewegungsvektor mit mindestens zwei Grenzkurven (1, 2), welche in einem Ausschnitt eines Vektorraums zumindest drei getrennte Bereiche (3, 4, 5) definieren, zu vergleichen und, in Abhängigkeit eines Ergebnisses des Vergleichens, eine Richtung der Bewegungsgeste als horizontal zu ermitteln, falls der Bewegungsvektor in einem ersten Bereich (4) der drei getrennten Bereiche (3, 4, 5) liegt, als vertikal, falls der Bewegungsvektor in einem zweiten Bereich (3) der drei getrennten Bereiche (3, 4, 5) liegt, und als nicht klassifizierbar, falls der Bewegungsvektor in einem dritten Bereich (5) der drei getrennten Bereiche (3, 4, 5) liegt
**dadurch gekennzeichnet, dass**
die Verarbeitungseinheit ausgelegt ist, für das Vergleichen Grenzkurven (1, 2) zu verwenden, die durch Funktionen definiert werden, welche nichtlinear von Raumrichtungen abhängen.

7. Gestenerkennungssystem nach Anspruch 6,
**dadurch gekennzeichnet, dass**
die Erfassungseinheit eine berührungsempfindliche Erfassungseinheit ist.

8. Gestenerkennungssystem nach Anspruch 6,
**dadurch gekennzeichnet, dass**
die Erfassungseinheit ein optisches Fingernavigationsmodul ist.

## Claims

1. Method for operating a gesture recognition system for a motor vehicle, the method comprising the steps of
- the detection of a movement gesture associated with an operating action by a detection unit,
- the generation of a movement vector representing the movement gesture by the detection unit,
- the transmission of the movement vector to a processing unit by the detection unit,
- the comparison of the movement vector to at least two limit curves (1, 2) defining in a section of a vector space at least three separate areas (3, 4, 5) by the processing unit, and, depending on the result of the comparison:
- the identification of a direction of the movement gesture by the processing unit as horizontal if the movement vector lies in a first area (4) of the three separate areas (3, 4, 5), as vertical if the movement vector lies in a second area (3) of the three separate areas (3, 4, 5) and as non-classifiable if the movement vector lies in a third area (5) of the three separate areas (3, 4, 5),
**characterised in that**
the limit curves (1, 2) are defined by functions depending on directions in space in a non-linear manner.

2. Method according to claim 1,
**characterised in that**
the directions in space are an x-direction (x) and a y-direction (y).

3. Method according to claim 2,
**characterised in that**
the two non-linear functions which define the limit curves (1, 2), if transformed into a vector angle(α)-vector length(L)-space, adopt for infinitely small vector lengths (L) a finite, predetermined vector angle(α)-starting value (6, 7), in particular between 30° and 60°, and for infinitely great vector lengths (L) a finite, predetermined vector angle(α)-end value (8, 9), in particular between 10° and 80°.

4. Method according to claim 3,
**characterised in that**
the vector angle end value (8) of the first non-linear function is greater than its vector angle starting value (6) and the vector angle end value (9) of the second non-linear function is smaller than its vector angle starting value (7), wherein the vector angle starting value (6) of the first non-linear function is greater than or equal to the vector angle starting value (7) of the second non-linear function.

5. Method according to any of the preceding claims,
**characterised in that**
before the comparison, negative components of the movement vector are multiplied by -1 and the section of the vector space exclusively includes values greater than or equal to zero.

6. Gesture recognition system for a motor vehicle, comprising
- a detection unit designed to detect a movement gesture associated with an operating action, to generate a movement vector representing the movement gesture and to transmit the movement vector to a processing unit, and
- a processing unit designed to compare the movement vector to at least two limit curves (1, 2) defining in a section of a vector space at least three separate areas (3, 4, 5) and, depending on the result of the comparison, to identify a direction of the movement gesture by the processing unit as horizontal if the movement vector lies in a first area (4) of the three separate areas (3, 4, 5), as vertical if the movement vector lies in a second area (3) of the three separate areas (3, 4, 5) and as non-classifiable if the movement vector lies in a third area (5) of the three separate areas (3, 4, 5),
**characterised in that**
the processing unit is designed to use for the comparison limit curves (1, 2) defined by functions depending on directions in space in a non-linear manner.

7. Gesture recognition system according to claim 6,
**characterised in that**
the detection unit is a non-contact detection unit.

8. Gesture recognition system according to claim 6,
**characterised in that**
the detection unit is an optical finger navigation module.

## Revendications

1. Procédé permettant de faire fonctionner un système de reconnaissance de gestes pour un véhicule automobile, comprenant les étapes consistant à
- détecter un geste de mouvement qui appartient à une opération de commande, par une unité de détection,
- produire un vecteur de mouvement qui représente le geste de mouvement, par l'unité de détection,
- transmettre le vecteur de mouvement à une unité de traitement par l'unité de détection,
- comparer le vecteur de mouvement avec au moins deux courbes limites (1, 2) qui délimitent dans une partie d'un espace vectoriel au moins trois zones séparées (3, 4, 5), au moyen de l'unité de traitement, et, en fonction d'un résultat de la comparaison :
- déterminer une direction du geste de mouvement par l'unité de traitement à l'horizontale, au cas où le vecteur de mouvement se situe dans une première zone (4) des trois zones séparées (3, 4, 5), à la verticale, au cas où le vecteur de mouvement se situe dans une deuxième zone (3) des trois zones séparées (3, 4, 5), et en tant que non classifiable, au cas où le vecteur de mouvement se situe dans une troisième zone (5) des trois zones séparées (3, 4, 5), **caractérisé en ce que** les courbes limites (1, 2) sont définies par des fonctions qui dépendent de manière non linéaire des directions spatiales.

2. Procédé selon la revendication 1, **caractérisé en ce que** les directions spatiales sont une direction x (x) et une direction y (y).

3. Procédé selon la revendication 2, **caractérisé en ce que** les deux fonctions non linéaires qui délimitent les courbes limites (1, 2), lorsqu'elles sont transformées en un espace d'angle de vecteur (a) / longueur de vecteur (L), pour d'infiniment petites longueurs de vecteur (L) adoptent une valeur de début (6, 7) finie prédéfinie d'angle de vecteur (a), en particulier comprise entre 30° et 60°, et pour d'infiniment grandes longueurs de vecteur (L), une valeur finale (8, 9) finie prédéfinie d'angle de vecteur (a), en particulier comprise entre 10°et 80°.

4. Procédé selon la revendication 3, **caractérisé en ce que** la valeur finale (8) d'angle de vecteur de la première fonction non linéaire est supérieure à sa valeur de début (6) d'angle de vecteur et la valeur finale (9) d'angle de vecteur de la seconde fonction non linéaire est inférieure à sa valeur de début (7) d'angle de vecteur, la valeur de début (6) d'angle de vecteur de la première fonction non linéaire étant supérieure ou égale à la valeur de début (7) d'angle de vecteur de la seconde fonction non linéaire.

5. Procédé selon l'une quelconque des revendications précédentes, **caractérisé en ce qu'**avant la comparaison des composantes négatives du vecteur de mouvement sont multipliées par - 1 et la partie de l'espace vectoriel comprend exclusivement des valeurs supérieures ou égales à zéro.

6. Système de reconnaissance de geste pour un véhicule automobile,
- comprenant une unité de détection qui est conçue pour détecter un geste de mouvement, qui appartient à une opération de commande, pour produire un vecteur de mouvement qui représente le geste de mouvement, et pour transmettre le vecteur de mouvement à une unité de traitement, et
- comprenant une unité de traitement qui est conçue pour comparer le vecteur de mouvement à au moins deux courbes limites (1, 2), qui délimitent dans une partie d'un espace vectoriel au moins trois zones séparées (3, 4, 5), et en fonction d'un résultat de la comparaison, pour déterminer une direction du geste de mouvement, à l'horizontale, au cas où le vecteur de mouvement se situe dans une première zone (4) des trois zones séparées (3, 4, 5), à la verticale, en cas où le vecteur de mouvement se situe dans une deuxième zone (3) des trois zones séparées (3, 4, 5), et en tant que non classifiable, au cas où le vecteur de mouvement se situe dans une troisième zone (5) des trois zones séparées (3, 4, 5), **caractérisé en ce que** l'unité de traitement est conçue pour utiliser les courbes limites (1, 2) pour la comparaison qui sont définies par des fonctions qui dépendent non linéairement des directions spatiales.

7. Système de reconnaissance de geste selon la revendication 6, **caractérisé en ce que** l'unité de détection est une unité de détection tactile.

8. Système de reconnaissance de geste selon la revendication 6, **caractérisé en ce que** l'unité de détection est un module de navigation tactile optique.
